# FASCICULE DE BREVET EUROPEEN

(11) **EP 2 930 106 B1**
(45) Date de publication et mention de la délivrance du brevet: **23.11.2016**
(21) Numéro de dépôt: 15161126.6
(22) Date de dépôt: 26.03.2015
(51) Int. Cl.: B64D 11/06, B60N 2/015, F16B 41/00

(54) **SYSTÈME DE FIXATION D'UN OBJET SUR UN RAIL D'UN SUPPORT**
BEFESTIGUNGSSYSTEM EINES GEGENSTANDS AUF DER SCHIENE EINER HALTERUNG
SYSTEM FOR FASTENING AN OBJECT TO A RAIL OF A SUPPORT

(30) Priorité: 07.04.2014 FR 1453050
(43) Date de publication de la demande: 14.10.2015
(73) Titulaire: Attax, 78420 Carrières sur Seine (FR)
(72) Inventeur: Bouchenoire, Marc, 95220 Herblay (FR)
(74) Mandataire: Lavoix

(56) Documents cités:
- EP-A1- 0 431 786
- GB-A- 2 275 296
- US-A- 1 349 491
- US-A1- 2008 089 758

## Description

La présente invention concerne un système de fixation d'un objet sur un rail d'un support.

De tels systèmes de fixation ont par exemple déjà été utilisés pour fixer des objets tels que des sièges ou autres sur des rails d'un support formé par exemple par un plancher d'aéronef, de véhicule automobile, etc. De tels systèmes sont par exemple décrits dans les documents GB2275296 et US2008/089758.

D'une façon générale, de tels dispositifs comportent par exemple une embase destinée à être posée sur ou sous le rail et à être en appui contre ce rail.

Cette embase comporte par exemple des moyens à vis/écrou de serrage de celle-ci sur le rail, afin de bloquer l'objet en position sur le rail et donc sur le support.

Ces moyens à vis/écrou comportent par exemple une tige filetée ou associée à une pièce filetée, engagée dans un trou taraudé de l'embase. Une extrémité de la tige comporte des moyens en forme de talon de serrage destinés à être placés sous le rail pour serrer celui-ci entre ce talon et l'embase ; une autre extrémité de la tige comporte des moyens de manoeuvre de cette tige, par exemple par un opérateur, pour permettre son serrage ou son desserrage du rail.

Ces moyens de manoeuvre comprennent par exemple des portions en saillie latérales ou encore une empreinte destinée à recevoir un outil, permettant un opérateur de serrer ou de desserrer le système.

Cependant tous ces systèmes présentent un certain nombre d'inconvénients au niveau des risques de désolidarisation de l'ensemble, par exemple en raison de fausses manipulations ou encore des vibrations rencontrées dans ce type d'applications.

De plus ces systèmes sont assez compliqués à manipuler.

Le but de l'invention est donc de résoudre ces problèmes.

A cet effet, l'invention a pour objet un système de fixation d'un objet sur un rail d'un support, du type comportant une embase destinée à être en appui sur le rail et comportant des moyens à vis/écrou de serrage de celle-ci sur le rail, les moyens à vis/écrou comprenant une tige, une extrémité des moyens à vis/écrou comportant un talon de serrage destiné à être placé sous le rail pour serrer celui-ci entre ce talon et l'embase, une autre extrémité des moyens à vis/écrou comportant des moyens de manoeuvre par un opérateur pour serrer/desserrer le système, dans lequel les moyens à vis/écrou sont en outre associés à des moyens débrayables d'anti-retour pour empêcher tout desserrage involontaire du système et comportant un manchon placé autour de la tige, solidaire en rotation de celle-ci et sollicité élastiquement en appui contre une collerette de l'embase, la collerette et le manchon comportant des crans d'anti-retour complémentaires.

Suivant d'autres caractéristiques avantageuses du système selon l'invention, prises seules ou en combinaison :
- le système comporte des moyens de sollicitation élastique du manchon contre la collerette de l'embase formés par un ressort hélicoïdal ;
- la collerette est venue de matière avec l'embase ;
- les moyens d'anti-retour sont débrayables par un opérateur.

L'invention a également pour objet un ensemble comprenant un système de fixation précédemment décrit et un rail apte à être assemblé audit système de fixation et à un support.

L'invention a également pour objet un ensemble comprenant un système de fixation précédemment décrit et un objet apte à être fixé à un support par ledit système, l'objet étant un siège.

L'invention a également pour objet un ensemble comprenant un système de fixation précédemment décrit, un rail apte à être assemblé audit système de fixation et un support assemblé audit rail, le support étant un plancher d'aéronef. L'invention sera mieux comprise à l'aide de la description qui va suivre, donnée uniquement à titre d'exemple et faite en se référant aux dessins annexés, sur lesquels :
- la figure 1 représente une vue en perspective d'un système de fixation selon un exemple de réalisation de l'invention,
- la figure 2 représente une vue en coupe du système de la figure 1, et
- la figure 3 représente une vue latérale du système des figures 1 et 2, en position dans un rail de fixation d'un support.

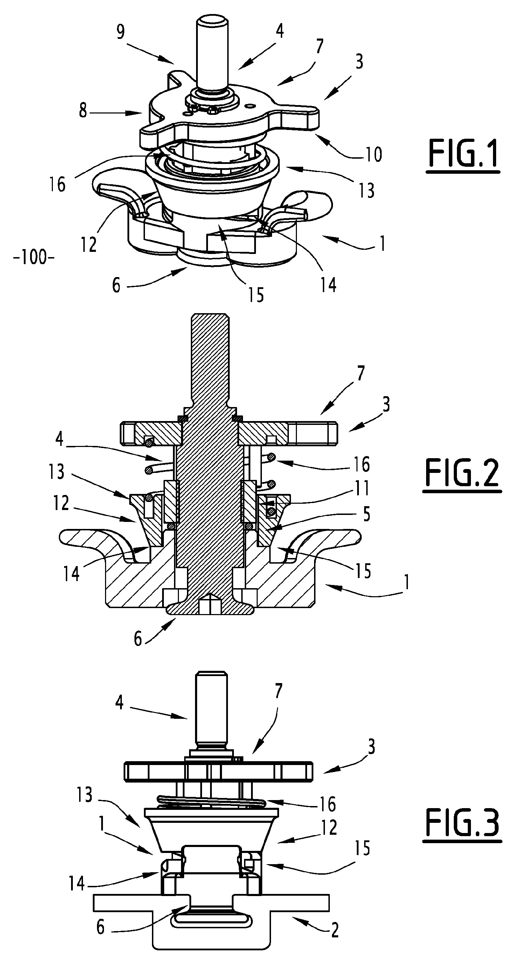

Les figures 1 à 3 représentent un système 100 de fixation d'un objet sur un rail d'un support.

L'objet est par exemple constitué par un siège d'aéronef ou tout autre objet destiné à être fixé sur un plancher de tout type de support tel qu'un aéronef.

Bien entendu d'autres supports peuvent être envisagés tels que par exemple un plancher de véhicule automobile.

D'une façon générale, le système de fixation 100 comporte une embase désignée par la référence générale 1. Dans l'exemple décrit, cette embase 1 est destinée à être posée en appui sur un rail 2, comme illustré sur la figure 3.

De plus le système de fixation 100 comporte des moyens à vis/écrou de serrage de cette embase sur ou contre ce rail. Ces moyens de serrage sont désignés par la référence générale 3 sur les figures 1 à 3.

Comme illustré sur la figure 2, ces moyens à vis/écrou comportent par exemple une tige 4 qui est placée dans un trou 5 de l'embase 1. La tige 4 présente à une extrémité un talon de serrage 6, destiné à être placé sous le rail 2 pour serrer et pincer ledit rail 2 entre l'embase 1 et le talon 6 sous l'action des moyens 3 à vis/écrou.

A cet effet, l'autre extrémité de la tige 4 comporte des moyens de manoeuvre désignés par la référence générale 7. Dans l'exemple illustré, les moyens de manoeuvre 7 sont formés par des parties en saillie 8, 9 et 10 permettant à un opérateur de faire tourner la tige 4 dans un sens ou dans l'autre par rapport à l'embase 1.

La tige 4 est par exemple en partie filetée et engagée dans un manchon taraudé désigné par la référence générale 11, associé à l'embase 1.

Si l'on fait tourner les moyens de manoeuvre 7 dans un sens ou dans l'autre, on fait tourner la tige 4 dans un sens ou dans l'autre. Ainsi, par coopération avec la portion taraudée du manchon 11, on fait monter ou descendre la tige 4 dans l'embase 1 ; le talon de serrage 6 est donc rapproché ou au contraire éloigné de l'embase 1 afin de serrer ou de desserrer le système de fixation 100 sur le rail 2, par pincement du rail entre l'embase 1 et le talon 6.

Les moyens 3 à vis/écrou sont associés à des moyens débrayables d'anti-retour pour empêcher tout desserrage intempestif ou involontaire du système.

Ces moyens débrayables d'anti-retour, désignés par la référence générale 12 sur les figures 1 à 3, sont interposés par exemple entre la tige 4 et l'embase 1.

Ces moyens 12 comportent par exemple un manchon 13 placé autour de la tige 4. Le manchon 13 est solidaire en rotation de la tige 4 et sollicité élastiquement pour que l'une de ses extrémités vienne en appui contre une collerette correspondante 14 de l'embase 1. La collerette 14 est par exemple venue de matière avec l'embase 1.

Les surfaces en regard de cette collerette 14 et du manchon 13 sont munies de crans d'anti-retour 15.

Le manchon 13 est sollicité élastiquement en appui contre la collerette 14 de l'embase par l'intermédiaire de moyens de sollicitation élastique, formés par exemple par un ressort hélicoïdal 16.

Lorsque l'opérateur souhaite serrer le système de fixation 100, il peut faire tourner la tige 4 grâce aux moyens de manoeuvre 7, en tournant lesdits moyens 7, par exemple dans le sens des aiguilles d'une montre si l'on regarde le système par-dessus.

Lors de ce déplacement en rotation, le manchon 13 porté par la tige 4 tourne également ; l'organe élastique 16 de sollicitation du manchon 13 permet audit manchon 13 de se déplacer axialement autour de la tige 4, pour s'effacer sur ladite tige 4. Les crans 15 du manchon 13 peuvent ainsi franchir les crans 15 correspondants de la collerette 14 de l'embase, afin de serrer le talon 6 sous le rail 2. Le rail 2 est donc serré entre le talon 6 et l'embase 1 pour bloquer le système 100, et donc l'objet tel que le siège, en position sur le rail 2 et donc sur le plancher.

Tout desserrage intempestif ou involontaire de ce système 100 est empêché par les crans 15 d'anti-retour prévus sur les surfaces en regard du manchon 13 et de l'embase 1, et plus particulièrement de la collerette 14 de ladite embase.

Lorsqu'un opérateur souhaite desserrer le système de fixation 100, il escamote axialement le manchon 13 en soulevant celui-ci à l'encontre de la sollicitation élastique des moyens 16, pour dégager les crans 15 de ce manchon des crans correspondants de la collerette 14 de l'embase.

Une fois le manchon escamoté, l'opérateur peut alors faire tourner la tige 4, par exemple dans le sens inverse des aiguilles d'une montre, afin de desserrer le système de fixation 100.

Un tel système présente un certain nombre d'avantages au niveau de sa fiabilité de fixation. En effet, il est impossible qu'un tel système se desserre par accident ou de façon intempestive, par exemple en raison de vibrations. Il convient que l'opérateur qui souhaite desserrer le système de fixation engage une manoeuvre de dégagement du manchon et des crans d'anti-retour, afin de débrayer ceux-ci et permettre un desserrage du système.

## Revendications

1. Système (100) de fixation d'un objet sur un rail (2) d'un support, comportant une embase (1) destinée à être en appui sur le rail et comportant des moyens (3) à vis/écrou de serrage de celle-ci sur le rail, les moyens à vis/écrou comprenant une tige (4),
une extrémité des moyens à vis/écrou comportant un talon (6) de serrage destiné à être placé sous le rail pour serrer celui-ci entre ce talon et l'embase, une autre extrémité des moyens à vis/écrou comportant des moyens de manoeuvre (8, 9, 10) par un opérateur pour serrer/desserrer le système, les moyens à vis/écrou étant en outre associés à des moyens débrayables d'anti-retour (13, 14, 15) pour empêcher tout desserrage involontaire du système, **caractérisé en ce que** les moyens débrayables d'anti-retour (13,14,15) comportent un manchon (13) placé autour de la tige (4), solidaire en rotation de celle-ci et sollicité élastiquement en appui contre une collerette (14) de l'embase, la collerette et le manchon comportant des crans d'anti-retour complémentaires (15).

2. Système de fixation selon la revendication 1, **caractérisé en ce qu'**il comporte des moyens de sollicitation élastique (16) du manchon contre la collerette de l'embase.

3. Système de fixation selon la revendication 2, **caractérisé en ce que** les moyens de sollicitation élastique (16) sont formés par un ressort hélicoïdal.

4. Système de fixation selon l'une quelconque des revendications précédentes, **caractérisé en ce que** la collerette (14) est venue de matière avec l'embase.

5. Système de fixation selon l'une quelconque des revendications précédentes, **caractérisé en ce que** les moyens d'anti-retour (13, 14, 15) sont débrayables par un opérateur.

6. Ensemble comprenant un système de fixation (100) selon l'une des revendications précédentes et un rail (2) apte à être assemblé audit système de fixation et à un support.

7. Ensemble comprenant un système de fixation (100) selon l'une des revendications 1 à 5 et un objet apte à être fixé à un support par ledit système, l'objet étant un siège.

8. Ensemble comprenant un système de fixation (100) selon l'une des revendications 1 à 5, un rail (2) apte à être assemblé audit système de fixation et un support assemblé audit rail, le support étant un plancher d'aéronef.

## Patentansprüche

1. System (100) zur Befestigung eines Gegenstands an einer Schiene (2) eines Trägers, einen Sockel (1) umfassend, der dazu bestimmt ist, an der Schiene anzuliegen und Schraube/Mutter-Einrichtungen (3) zu dessen Festziehen an der Schiene umfasst, wobei die Schraube/Mutter-Einrichtungen einen Schaft (4) umfassen,
wobei ein Ende der Schraube/Mutter-Einrichtungen einen Festklemmabsatz (6) umfasst, der dazu bestimmt ist, unter der Schiene angeordnet zu werden, um diese zwischen dem Absatz und dem Sockel festzuklemmen, wobei ein anderes Ende der Schraube/Mutter-Einrichtungen Einrichtungen zur Handhabung (8, 9, 10) durch eine Bedienperson umfassen, um das System festzuklemmen/zu lösen,
wobei die Schraube/Mutter-Einrichtungen darüber hinaus lösbaren Rückstellverhinderungseinrichtungen (13, 14, 15) zugeordnet sind, um jegliches unbeabsichtigtes Lösen des Systems zu verhindern, **dadurch gekennzeichnet, dass** die lösbaren Rückstellverhinderungseinrichtungen (13, 14, 15) eine um den Schaft (4) herum angeordnete Muffe (13) umfassen, die drehfest mit diesem und elastisch in Anlage gegen einen Ringflansch (14) des Sockels druckbeaufschlagt ist, wobei der Ringflansch und die Muffe komplementäre Rückstellverhinderungsrasten (15) umfassen.

2. Befestigungssystem nach Anspruch 1, **dadurch gekennzeichnet, dass** es Einrichtungen (16) zur elastischen Druckbeaufschlagung der Muffe gegen den Ringflansch des Sockels umfasst.

3. Befestigungssystem nach Anspruch 2, **dadurch gekennzeichnet, dass** die Einrichtungen (16) zur elastischen Druckbeaufschlagung durch eine Spiralfeder gebildet sind.

4. Befestigungssystem nach einem der vorhergehenden Ansprüche, **dadurch gekennzeichnet, dass** der Ringflansch (14) materialeinheitlich mit dem Sockel ist.

5. Befestigungssystem nach einem der vorhergehenden Ansprüche, **dadurch gekennzeichnet, dass** die Rückstellverhinderungseinrichtungen (13, 14, 15) durch eine Bedienperson lösbar sind.

6. Einheit mit einem Befestigungssystem (100) nach einem der vorhergehenden Ansprüche und einer Schiene (2), die sich dazu eignet, an dem Befestigungssystem und einem Träger montiert zu werden.

7. Einheit mit einem Befestigungssystem (100) nach einem der Ansprüche 1 bis 5 und einem Gegenstand, der sich dazu eignet, mittels des Systems an einem Träger befestigt zu werden, wobei der Gegenstand ein Sitz ist.

8. Einheit mit einem Befestigungssystem (100) nach einem der vorhergehenden Ansprüche, einer Schiene (2), die sich dazu eignet, an dem Befestigungssystem montiert zu werden, und einem Träger, der an der Schiene montiert ist, wobei der Träger ein Flugzeugboden ist.

## Claims

1. A device (100) for attaching an object on a rail of a support, comprising a base (1) designed to bear on the rail and comprising screw/nut means (3) for tightening the base on the rail, said screw/nut means comprising a rod (4),
an end of the screw/nut means comprising a tightening heel (6) designed to be placed below the rail to tighten said rail between the heel and the base, a second end of the screw-nut means comprising an element for maneuvering (8, 9, 10) by an operator to tighten/loosen the device, said screw/nut means being further associated with a disengageable non-return device (13, 14, 15) to prevent any involuntary loosening of the device,
**characterized in that** the disengageable non-return device (13, 14, 15) comprises a sleeve (13) placed around the rod, secured in rotation with said rod and elastically biased bearing against a collar (14) of the base, the collar and the sleeve comprising complementary non-return indentations (15).

2. The attachment device according to claim 1, comprising an elastic biasing member (16) for biasing the sleeve against the collar of the base.

3. The attachment device according to claim 2, wherein the elastic biasing member (16) is formed by a helical spring.

4. The attachment device according to any of the preceding claims, wherein the collar (14) is integral with the base.

5. The attachment device according to any of the preceding claims, wherein the detachable non-return device (13, 14, 15)can be disengaged by an operator.

6. An assembly comprising an attachment device (100) according to any of the preceding claims and a rail (2) able to be assembled to said attachment device and a support.

7. An assembly comprising an attachment device (100) according to one of claims 1 to 5 and an object able to be attached to a support by said device, the object being a seat.

8. An assembly comprising an attachment device (100) according to one of claims 1 to 5, a rail (2) able to be assembled to said attachment device and a support assembled to said rail, the support being an aircraft floor.
